# EUROPÄISCHE PATENTSCHRIFT

(11) **EP 3 308 046 B1**
(45) Veröffentlichungstag und Bekanntmachung des Hinweises auf die Patenterteilung: **07.08.2019**
(21) Anmeldenummer: 16727628.6
(22) Anmeldetag: 02.06.2016
(51) Int. Cl.: F16D 55/226

(54) **SCHEIBENBREMSE FÜR EIN NUTZFAHRZEUG**
DISK BRAKE FOR A UTILITY VEHICLE
FREIN DE DISQUE POUR VÉHICULE UTILITAIRE

(30) Priorität: 15.06.2015 DE 102015109541
(43) Veröffentlichungstag der Anmeldung: 18.04.2018
(73) Patentinhaber: KNORR-BREMSE Systeme für Nutzfahrzeuge GmbH, 80809 München (DE)
(72) Erfinder: FRICKE, Jens, 94474 Vilshofen (DE); SCHOEFBERGER, Tobias, 84048 Mainburg (DE); ADAMCZYK, Philipp, 87677 Stöttwang (DE); PESCHEL, Michael, 82296 Schöngeising (DE); SCHMIDT, Peter, 83646 Bad Tölz (DE); RIECK, Kai, 86368 Gersthofen (DE)
(86) Internationale Anmeldenummer: PCT/EP2016/000910
(87) Internationale Veröffentlichungsnummer: WO 2016/202433

(56) Entgegenhaltungen:
- DE-A1- 10 330 306
- DE-A1-102007 001 213
- DE-A1-102012 102 584
- US-A- 4 345 674

## Beschreibung

Die Erfindung betrifft eine Scheibenbremse für ein Nutzfahrzeug nach dem Oberbegriff des Anspruchs 1.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern.

Um diesem Problem zu begegnen, ist in der gattungsgemäßen DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Diese Aufgabe wird durch eine Scheibenbremse mit den Merkmalen des Anspruchs 1 gelöst.

Durch die erfindungsgemäße Ausgestaltung der Scheibenbremse wird eine Rückstellung beider Bremsbeläge bei gelöster Bremse erreicht. Dabei wirkt die Rückstellkraft entgegen der jeweiligen Zuspannrichtung der beiden Bremsbeläge, also beim reaktionsseitigen Bremsbelag zum Sattelrücken hin und beim aktionsseitigen Bremsbelag zum Sattelkopf hin, unter Spaltbildungen gegenüber der Bremsscheibe.

Der Angriff der Stangen der erfindungsgemäßen Rückstelleinrichtung an den beiden Bremsbelägen erfolgt zweckmäßigerweise an deren Belagträgerplatten und zwar auf der dem daran befestigten Reibbelag zugewandten Seite.

Um ein Verkanten des jeweiligen Bremsbelages bei der Rückstellung zu vermeiden, greifen Stangen, jeweils paarweise, bezogen auf die Drehachse der Bremsscheibe, rechts und links an den Bremsbelägen, d.h. an deren Belagträgerplatten an.

Die Stangen bestehen aus einem formstabilen Material, vorzugsweise Metall und sind stangenförmig ausgebildet, mit weitgehend gleichbleibendem Querschnittsabmaß. Weitgehend gleichbleibend insoweit als an jeder Stange ein Bündchen angeformt ist, das als Mitnehmer bei der Zugstange und als Anschlag bei der Druckstange dient.

Der Mitnehmer der Zugstange ist an deren einem Ende angeformt und liegt an der aktionsseitigen Belagträgerplatte auf der dem Reibbelag zugewandten Seite an.

Der Anschlag der Druckstange hingegen korrespondiert mit einer zugeordneten Feder und dient der Verschiebung der Druckstange bei Entspannung der Feder, wenn die Bremsbeläge bei gelöster Bremse in ihre Ausgangsstellungen zurückgeschoben werden.

Nach einer vorteilhaften Weiterbildung der Erfindung sind ein Stangenpaar, also eine Zugstange und eine Druckstange, in einem am oder im Bremssattel angeordneten Gehäuse gehalten, das gegenüber einem fahrzeugseitigen Bremsträger, auf dem der Bremssattel als Schiebesattel, gleichfalls bezogen auf die Drehachse der Bremsscheibe, axial verschieblich gelagert ist, einstellbar.

Denkbar ist auch, jeweils einer der Federn mehrere Stangen zuzuordnen, d.h., mehrere Zug- und/oder Druckstangen.

Zur Kostenoptimierung der Fertigung der Rückstelleinrichtung sind gleichartige Federn für die Stangen vorgesehen, beispielsweise als Druckfedern, insbesondere Schraubenfedern, mit gleichen Federeigenschaften, wobei diese Schraubenfedern auf den Stangen geführt sind, wobei insbesondere die Zugstange auch mit einer Zugfeder in Verbindung gebracht werden kann.

Vorteilhafterweise liegt ein Wirkpunkt zwischen der Druckstange bzw. der Zugstange und dem Bremsbelag in der Nähe der durch eine Abstützkraft zwischen dem jeweiligen Bremsbelag und dem Bremsträger resultierenden Widerstandskraft.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine mit einer erfindungsgemäßen Rückstelleinrichtung versehene Scheibenbremse in einem Teilausschnitt in perspektivischer Ansicht
- Figur 2: eine Einzelheit der Scheibenbremse in einer schematischen, geschnittenen Seitenansicht.

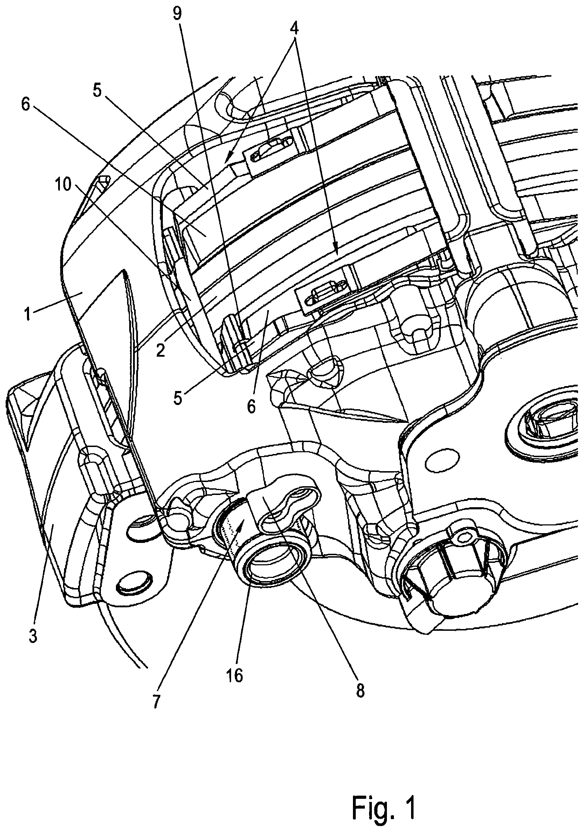

In der **Figur 1** ist ein Teil einer Scheibenbremse für ein Nutzfahrzeug abgebildet, mit einem eine Bremsscheibe 2 übergreifenden Bremssattel 1, der, bezogen auf die Drehachse der Bremsscheibe 2, axial verschiebbar an einem fahrzeugseitigen, also ortsfesten Bremsträger 3 angeschlossen ist, wozu der Bremssattel 1 auf Führungsholmen 16 gelagert ist, die mit dem Bremsträger 3 verbunden sind.

Im Bremsträger 3 sind Bremsbeläge 4 angeordnet, die im Fall einer Bremsung beidseitig an die Bremsscheibe 2 pressbar sind. Dabei weist jeder Bremsbelag 4 eine Belagträgerplatte 5 und einen auf der der Bremsscheibe 2 zugewandten Seite daran befestigten Reibbelag 6 auf, der in Funktion, also bei einer Bremsung, gegen die Bremsscheibe 2 gepresst ist.

Die Bremsung erfolgt mittels einer im Bremssattel 1 angeordneten, nicht dargestellten Zuspanneinrichtung mit einem Bremshebel, der pneumatisch oder elektromechanisch schwenkbar gelagert ist und bei dessen Betätigung der zugeordnete Bremsbelag 4 als aktionsseitiger Bremsbelag die Bremsscheibe 2 kontaktiert. Im weiteren Verlauf wird mittels auftretender Reaktionskräfte der Bremssattel 1 entgegengesetzt verschoben, unter Mitnahme des reaktionsseitigen Bremsbelags 4, bis dieser gleichfalls an der Bremsscheibe 2 reibend zur Anlage kommt.

Nach einem Lösen der Bremse werden die beiden sich gegenüberliegenden Bremsbeläge 4 mittels einer Rückstelleinrichtung 7 so weit von der Bremsscheibe 2 gelöst, dass diese gegenüber den Bremsbelägen 4 frei läuft.

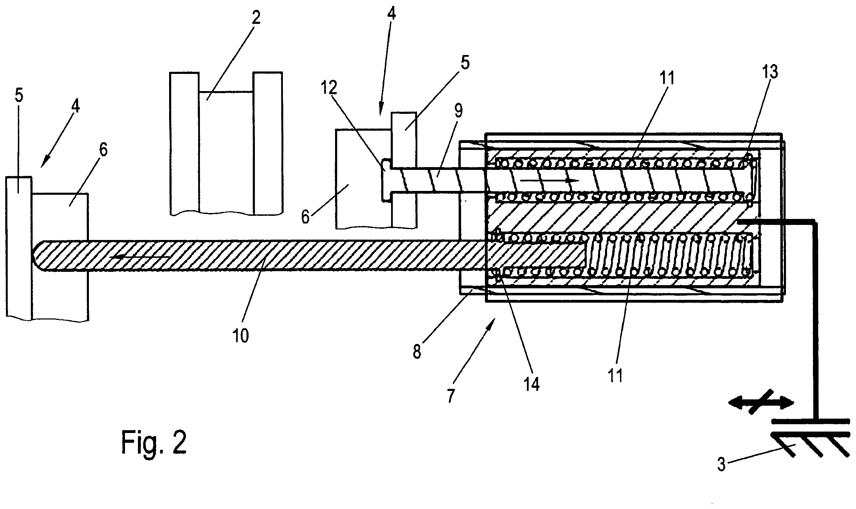

In der **Figur 2** ist die Rückstelleinrichtung 7 als Einzelheit in schematischer Ansicht abgebildet. Dabei weist die Rückstelleinrichtung 7 erfindungsgemäß zwei entgegen der jeweiligen Zuspannrichtung federbelastet an den Bremsbelägen 4 anliegende Stangen auf, von denen eine als Druckstange 10 und die andere als Zugstange 9 ausgebildet ist.

Wie insbesondere die Figur 1 sehr deutlich wiedergibt, liegt die Druckstange 10 mit ihrem freien Ende am Rand der Belagträgerplatte 5 des reaktionsseitigen Bremsbelages 4 an, während die Zugstange 9 an der Belagträgerplatte 5 des aktionsseitigen Bremsbelages 4 anliegt. In beiden Fällen an den den Reibbelägen 6 zugewandten Seiten der Belagträgerplatten 5.

Zur Federbelastung der Zugstange 9 und der Druckstange 10 ist jeweils eine als Schraubenfeder ausgebildete Druckfeder 11 vorgesehen, die im Beispiel identisch ausgebildet sind und die die Zugstange 9 und die Druckstange 10 bereichsweise umschlingen. Diese jeweiligen Funktionseinheiten sind in einem Gehäuse 8 gelagert, das in eine Aufnahme des Bremssattels 1 eingesetzt ist.

An einem Ende weist die Zugstange 9 einen Mitnehmer 12 in Form eines Bündchens auf, der an der aktionsseitigen Belagträgerplatte 5 anliegt. Am anderen Ende der Zugstange 9 ist ein Mitnehmerring 13 befestigt, mittels dessen die Druckfeder 11 bei einer entsprechenden axialen Verschiebung der Zugstange 9 gespannt wird, wobei die Druckfeder 11 sich mit ihrer anderen Stirnseite an einer Innenwandung des Gehäuses 8 abstützt.

Die Druckstange 10 ist mit einem umfänglichen Anschlag 14 versehen, der an einer Stirnseite der zugeordneten Druckfeder 11 anliegt, während sich die andere Stirnseite der Druckfeder 11 am Grund des Gehäuses 8 abstützt.

In der Figur 2 ist eine Ausgangsstellung, d.h., eine gelöste Stellung der Scheibenbremse dargestellt, bei der die Druckfedern 11 im Wesentlichen entspannt sind. Bei einer Bremsung werden die Bremsbeläge 4 aufeinander zu gerichtet verschoben bis zu reibenden Anlage an der Bremsscheibe 2. Dabei wird die auf der Zugstange 9 geführte Druckfeder 11 gespannt, wobei hierzu der Mitnehmerring 13 in Eingriff ist. Die auf der Druckstange 10 geführte Druckfeder 11 wird gleichermaßen durch Zusammendrücken gespannt, wobei die zu überwindenden Federkräfte durch die Zuspannkraft leicht aufgebracht wird.

Bei einem Lösen der Bremse werden die Zugstange 9 und die Druckstange 10 durch die Kraft der Druckfedern 11 axial bewegt und zwar die Zugstange 9 unter Mitnahme, d.h. Zurückziehen des aktionsseitigen Bremsbelags 4, während der reaktionsseitige Bremsbelag 4, in der Figur 2 linksseitig erkennbar, durch die Druckstange 10 aus dem Wirkbereich mit der Bremsscheibe 2 herausgedrückt wird, entsprechend den Pfeilangaben in der Figur 2.

Im weiteren Verlauf wird der Bremssattel 1 durch die anliegende und weiterhin unter Federdruck stehende Druckstange 10 in eine Ausgangsstellung verschoben.

### BEZUGSZEICHENLISTE

- 1: Bremssattel
- 2: Bremsscheibe
- 3: Bremsträger
- 4: Bremsbelag
- 5: Belagträgerplatte
- 6: Reibbelag
- 7: Rückstelleinrichtung
- 8: Gehäuse
- 9: Zugstange
- 10: Druckstange
- 11: Druckfeder
- 12: Mitnehmer
- 13: Mitnehmerring
- 14: Anschlag
- 16: Führungsholm

## Patentansprüche

1. Scheibenbremse für ein Nutzfahrzeug, mit einem eine Bremsscheibe (2) übergreifenden, als Schiebesattel ausgebildeten Bremssattel (1), der an einem ortsfesten Bremsträger (3) befestigt ist, zwei im Bremssattel (1) angeordneten, gegensinnig bewegbaren, jeweils eine Belagträgerplatte (5) und einen darauf befestigten Reibbelag (6) aufweisenden Bremsbelägen (4), von denen ein aktionsseitiger mittels einer Zuspanneinrichtung über mindestens einen Bremsstempel gegen die Bremsscheibe (2) pressbar ist, sowie mindestens einer Rückstelleinrichtung (7), mit der der Bremssattel (1) nach einem bremsbedingten Verschieben und Lösen der Bremse rückführbar ist,
**dadurch gekennzeichnet, dass**
die Rückstelleinrichtung (7) mindestens zwei entgegen der jeweiligen Zuspannrichtung der Bremsbeläge federbelastet daran anliegende Stangen aufweist, von denen eine als Zugstange (9) und die andere als Druckstange (10) ausgebildet ist.

2. Scheibenbremse nach Anspruch 1,
**dadurch gekennzeichnet, dass**
die Zugstange (9) und die Druckstange (10) an der Belagträgerplatte (5) des jeweiligen Bremsbelages (4) anliegen.

3. Scheibenbremse nach Anspruch 1 oder 2,
**dadurch gekennzeichnet, dass**
die Zugstange (9) an der Belagträgerplatte (5) des aktionsseitigen Bremsbelages (4) gehalten ist, während sich die Druckstange (10) an der Belagträgerplatte (5) des reaktionsseitigen Bremsbelages (4) abstützt.

4. Scheibenbremse nach einem der vorhergehenden Ansprüche,
**dadurch gekennzeichnet, dass**
die Zugstange (9) und die Druckstange (10) auf den den jeweiligen Reibbelägen der Bremsbeläge (4) zugewandten Seiten der Belagträgerplatten (5) anliegen.

5. Scheibenbremse nach einem der vorhergehenden Ansprüche,
**dadurch gekennzeichnet, dass**
zur Federbelastung der Zug- und Druckstangen (9, 10) diese jeweils mit einer Zug- oder Druckfeder (11) in Wirkverbindung stehen.

6. Scheibenbremse nach Anspruch 5, **dadurch gekennzeichnet, dass**
die Zug- oder Druckfedern (11) als Schraubenfedern ausgebildet und bereichsweise auf der Zugstange (9) und der Druckstange (10) geführt sind.

7. Scheibenbremse nach einem der Ansprüche 5 oder 6, **dadurch gekennzeichnet, dass**
die Funktionseinheit Zugstange (9)/Zug- oder Druckfeder (11) und Druckstange (10) und Zug- oder Druckfeder (11) in einem Gehäuse (8) gelagert sind.

8. Scheibenbremse nach Anspruch 7, **dadurch gekennzeichnet, dass**
das Gehäuse (8) im Bremssattel (1) positioniert ist.

9. Scheibenbremse nach einem der Ansprüche 5 bis 8, **dadurch gekennzeichnet, dass**
die Zug- oder Druckfedern (11) identisch sind.

10. Scheibenbremse nach einem der vorhergehenden Ansprüche,
**dadurch gekennzeichnet, dass**
die Zugstange (9) und die Druckstange (10) achsparallel zueinander verlaufen.

11. Scheibenbremse nach einem der vorhergehenden Ansprüche,
**dadurch gekennzeichnet, dass**
die Zugstange (9) an einem Ende einen Mitnehmer (12) aufweist, der an der Belagträgerplatte (5) anliegt.

12. Scheibenbremse nach Anspruch 11, **dadurch gekennzeichnet, dass**
die Zugstange (9) auf der dem Mitnehmer (12) abgewandten Endseite einen Mitnehmerring (13) aufweist, an dem die Druckfeder (11) anliegt, die sich andererseits an einer Gehäusewandung abstützt.

13. Scheibenbremse nach einem der Ansprüche 5 bis 12, **dadurch gekennzeichnet, dass**
die Druckstange (10) einen zumindest bereichsweise umfänglichen Anschlag (14) aufweist, an dem die Druckfeder (11) mit einem Ende anliegt, während sich das andere Ende am Grund des Gehäuses (8) abstützt.

## Claims

1. Disc brake for a utility vehicle, comprising a brake caliper (1) in the form of a sliding caliper which spans across a brake disc (2), which caliper is fastened to a positionally fixed brake carrier (3), two brake linings (4) arranged in the brake caliper (1) and able to move in opposite directions, each having a lining carrier plate (5) with a friction lining (6) attached thereto, of which one on the action side can be pressed by means of an application device and by means of at least one brake plunger against the brake disc (2), and at least one restoring device (7) by means of which, after a displacement induced by a braking operation and when the brake has been released, the brake caliper (1) can be moved back again,
**characterised in that**
the restoring device (7) comprises at least two rods which are spring loaded against the respective application directions of the brake pads and which bear against them, one of which is in the form of a pull-rod (9) whereas the other is a push-rod (10).

2. Disc brake according to Claim 1,
**characterised in that**
the pull-rod (9) and the push-rod (10) bear against the lining carrier plate (5) of the respective brake lining (4).

3. Disc brake according to Claims 1 or 2,
**characterised in that**
the pull-rod (9) is held on the lining carrier plate (5) of the brake lining (4) on the action side, while the push-rod (10) is supported against the lining carrier plate (5) of the brake lining (4) on the reaction side.

4. Disc brake according to any of the preceding claims,
**characterised in that**
the pull-rod (9) and the push-rod (10) bear against the sides of the lining carrier plates (5) that face towards the respective friction linings of the brake linings (4).

5. Disc brake according to any of the preceding claims,
**characterised in that**
in order to spring-load the pull-rod and the push-rod (9, 10), the rods are functionally connected with a tension or compression spring (11).

6. Disc brake according to Claim 5,
**characterised in that**
the tension or compression springs (11) are in the form of spiral springs and are guided over parts of the pull-rod (9) and the push-rod (10).

7. Disc brake according to either of Claims 5 or 6,
**characterised in that**
the functional unit comprising the pull-rod (9) / tension or compression spring (11) and the push-rod (10) and its tension or compression spring (11), is accommodated in a housing (8).

8. Disc brake according to Claim 7,
**characterised in that**
the housing (8) is positioned in the brake caliper (1).

9. Disc brake according to any of Claims 5 to 8,
**characterised in that**
the tension or compression springs (11) are identical.

10. Disc brake according to any of the preceding claims,
**characterised in that**
the pull-rod (9) and the push-rod (10) extend with their axes parallel to one another.

11. Disc brake according to any of the preceding claims,
**characterised in that**
the pull-rod (9) has a driver (12) at one end, which bears against the lining carrier plate (5).

12. Disc brake according to Claim 11,
**characterised in that**
at its end remote from the driver (12) the pull-rod (9) has a driver ring (13) against which the compression spring (11) bears, the other end of the spring being supported against a wall of the housing.

13. Disc brake according to any of Claims 5 to 12,
**characterised in that**
the push-rod (10) has a stop (14) extending around at least part of its circumference, against which the compression spring (11) bears at one end thereof, while its other end is supported on the bottom of the housing (8).

## Revendications

1. Frein à disque d'un véhicule utilitaire, comprenant un étrier (1) de frein, qui chevauche un disque (2) de frein, qui est constitué sous la forme d'un étrier (1) coulissant et qui est fixé à un support (3) de frein fixe, deux garnitures (4) de frein ayant chacune une plaque (5) formant porte-garniture et une garniture (6) de friction, qui y est fixée, garniture dont l'une, du côté action, peut être pressée au moyen d'un dispositif de serrage, par au moins un poinçon de frein, sur le disque (2) de frein, ainsi qu'au moins un dispositif (7) de rappel, par lequel l'étrier (1) de frein peut être ramené, après un déplacement, dû au freinage, et desserrage du frein,
**caractérisé en ce que**
le dispositif (7) de rappel a au moins deux barres s'appliquant, en y étant soumises à l'action d'un ressort, aux garnitures de frein dans le sens contraire au sens de serrage, dont l'une est constituée sous la forme d'une barre (9) d'application d'une traction et l'autre sous la forme d'une barre (10) d'application d'une pression.

2. Frein à disque suivant la revendication 1,
**caractérisé en ce que**
la barre (9) d'application d'une traction et la barre (10) d'application d'une pression s'appliquent à la plaque (5) formant porte-garniture de la garniture (4) de frein respective.

3. Frein à disque suivant la revendication 1 ou 2,
**caractérisé en ce que**
la barre (9) d'application d'une traction est maintenue sur la plaque (5) formant porte-garniture de la garniture (4) de frein du côté de l'action, tandis que la barre (10) d'application d'une pression s'appuie sur la plaque (5) formant porte-garniture de la garniture (4) de frein du côté de la réaction.

4. Frein à disque suivant l'une des revendications précédentes,
**caractérisé en ce que**
la barre (9) d'application d'une traction et la barre (10) d'application d'une pression s'appliquent aux côtés, tournés vers les garnitures de friction respectives des garnitures (4) de frein, des plaques (5) formant porte-garniture.

5. Frein à disque suivant l'une des revendications précédentes,
**caractérisé en ce que**,
pour soumettre les barres (9, 10) d'application d'une traction et d'une pression à un ressort, elles sont en liaison d'action avec, respectivement, un ressort (11) de traction ou de compression.

6. Frein à disque suivant la revendication 5,
**caractérisé en ce que**
les ressorts (11) de traction ou de compression sont constitués sous la forme de ressorts hélicoïdaux et sont guidés, par endroit, sur la barre (9) d'application d'une traction et la barre (10) d'application d'une pression.

7. Frein à disque suivant l'une des revendications 5 ou 6,
**caractérisé en ce que**
l'unité fonctionnelle barre (9) d'application d'une traction/ressort (11) de traction ou de compression et barre (10) d'application d'une pression et ressort (11) de pression ou de compression sont montées dans un boîtier (8).

8. Frein à disque suivant la revendication 7,
**caractérisé en ce que**
le boîtier (8) est placé dans l'étrier (1) de frein.

9. Frein à disque suivant l'une des revendications 5 à 8,
**caractérisé en ce que**
les ressorts (11) de traction ou de compression sont pareils.

10. Frein à disque suivant l'une des revendications précédentes,
**caractérisé en ce que**
la barre (9) d'application d'une traction et la barre (10) d'application d'une pression s'étendent en ayant leur axe parallèle entre eux.

11. Frein à disque suivant l'une des revendications précédentes,
**caractérisé en ce que**
la barre (9) d'application d'une traction a, à une extrémité, un entraîneur (12), qui s'applique à la plaque (5) formant porte-garniture.

12. Frein à disque suivant la revendication 11,
**caractérisé en ce que**
la barre (9) d'application d'une traction a, du côté de l'extrémité opposée à l'entraîneur (12), une bague (13) d'entraîneur, à laquelle s'applique le ressort (11) de compression, lequel s'appuie, d'autre part, à une paroi du boîtier.

13. Frein à disque suivant l'une des revendications 5 à 12,
**caractérisé en ce que**
la barre (10) d'application d'une pression a, au moins par endroit, une butée (14) faisant le tour, où le ressort (11) de compression s'applique par une extrémité, tandis que l'autre extrémité s'appuie au fond du boîtier (8).
